# EUROPEAN PATENT APPLICATION

(11) **EP 4 741 472 A1**
(43) Date of publication of application: **13.05.2026**
(21) Application number: 25772327.0
(22) Date of filing: 18.02.2025
(51) Int. Cl.: C09K 21/12, C08L 67/00, C08L 77/00, C08K 5/00

(54) **FLAME RETARDANT COMPOUND, AND FLAME RETARDANT RESIN COMPOSITION AND PRODUCT USING SAME**

(30) Priority: 11.03.2024 KR 20240033941
(71) Applicant: LG Chem, Ltd., Seoul 07336 (KR)
(72) Inventor: IM, Seoyoung, Daejeon 34122 (KR); JANG, Hanbit, Daejeon 34122 (KR); HWANG, Byunghee, Daejeon 34122 (KR); LEE, Hoyong, Daejeon 34122 (KR)
(74) Representative: Goddar, Heinz J.
(86) International application number: PCT/KR2025/002334
(87) International publication number: WO 2025/192888

(57) **Abstract**

The present disclosure relates to a flame retardant compound of a novel structure with excellent flame retardancy properties and improved mechanical properties, and to a flame retardant resin composition and flame retardant products using the same.

## Description

### [TECHNICAL FIELD]

### Cross-Reference to Related Applications

This application claims priority to and the benefit of Korean Patent Application No. 10-2024-0033941, filed on March 11, 2024, with the Korean Intellectual Property Office, the disclosures of which are incorporated herein by reference in their entirety.

The present disclosure relates to a flame retardant compound, a flame retardant resin composition, and a flame retardant product using the same. More specifically, it relates to a flame retardant compound capable of improving the flame retardant properties and mechanical properties of a polymer resin even when used in a relatively smaller amount than conventional compositions, and to a flame retardant resin composition and a flame retardant product using the same.

### [BACKGROUND OF ART]

Resins used in electrical/electronic products and office equipment must satisfy flame retardant standards to ensure the fire safety of electrical/electronic products.

There are methods for imparting flame retardancy, such as polymerizing by including a flame-retardant monomer, and mixing a flame retardant or flame-retardant auxiliary with the produced resin. The flame retardants include halogenated flame retardants, as well as non-halogen flame retardants such as phosphorus-based, nitrogen-based, and hydroxide-based flame retardants. The flame-retardant auxiliaries include antimony compounds, silicon-based compounds, and zinc-based compounds etc.

The halogenated flame retardants are the most common since they have higher flame retardant efficiency compared to non-halogen flame retardants and can maintain the mechanical properties of the resin, among which brominated flame retardants are particularly effective. However, if the resin is processed by adding the brominated flame retardant, the high temperatures and pressures generated during processing reduce thermal stability, causing decomposition, and as a result, corrosive and toxic gases are produced, which negatively affect both the working environment and human body.

To avoid these problems, a method of using non-halogenated flame retardants is available, among which the method of using non-halogenated flame retardant compounds is widely employed. However, as non-halogenated flame retardant compounds have lower flame-retardant efficiency compared to halogenated flame retardants, there is a disadvantage that an excessive amount of non-halogenated flame retardant compounds must be added, and in the case of a thermoplastic resin composition that is incapable of generating a char due to the principle of phosphorus-based flame retardant systems, it is difficult to exhibit sufficient flame retardancy.

Therefore, there is a demand for the development of non-halogenated flame retardants suitable for increasing the flame retardancy of polymer resins.

### [DETAILED DESCRIPTION OF THE INVENTION]

### [TECHNICAL PROBLEM]

It is an object of the present invention to provide a flame retardant compound capable of improving the flame retardant properties and mechanical properties of a polymer resin.

It is another object of the present disclosure to provide a flame retardant resin composition comprising the flame retardant compound.

It is another object of the present disclosure to provide a flame retardant product comprising the flame retardant resin composition.

### [Technical Solution]

In this specification, there is provided a flame retardant compound represented by the following Chemical Formula 1: 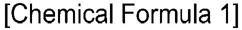 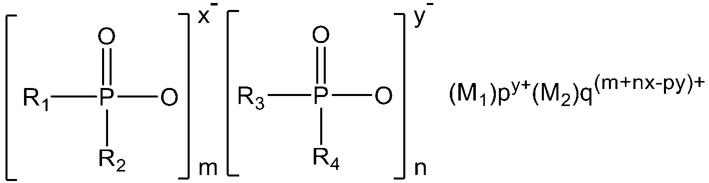 wherein, in Chemical Formula 1,
R₁ and R₂ are the same or different from each other and are each independently hydrogen, a linear or branched alkyl group, a substituted or unsubstituted aryl group, or a substituted or unsubstituted heteroaryl group,
R₃ is hydrogen, a linear or branched alkyl group, a substituted or unsubstituted aryl group, a substituted or unsubstituted heteroaryl group, O, S, NR₂, or the following Chemical Formula a, 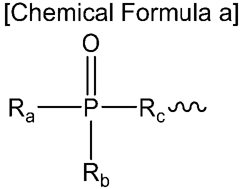
wherein, in the Chemical Formula a,
Ra, Rb, and Rc are the same or different from each other and each independently is hydrogen, a linear or branched alkyl group, a substituted or unsubstituted aryl group, a substituted or unsubstituted heteroaryl group, O, S, or NR₂,
R₄ is hydrogen, a linear or branched alkyl group, a substituted or unsubstituted aryl group, a substituted or unsubstituted heteroaryl group, O, S, or NR₂, wherein the alkyl group, aryl group, or heteroaryl group may include at least one carboxyl group, hydroxyl group, or amino group,
R₃ and R₄ may form a ring with each other,
M₁ is Zn,
M₂ is one or more selected from the group consisting of metal and ammonium ions excluding Zn,
m, n, x, and y are the same or different from each other and each independently is an integer from 0 to 5,
p and q are integers of 1 or more.

In addition, in this specification, there is provided a flame retardant resin composition comprising the flame retardant compound and a binder resin.

Further, in this specification, there is provided a flame retardant product comprising the flame retardant resin composition.

Hereinafter, the flame retardant compound, and the flame retardant resin composition and flame retardant product using the same according to the specific embodiment of the invention will be described in more detail.

In this specification, when a part is described as "comprising" a certain component, it means that other components can be further included unless specifically stated otherwise.

In this specification, examples of substituents are described below, but are not limited thereto.

In this specification, the term "substitution" means that a functional group other than a hydrogen atom is bonded in the compound, and the position of substitution is not limited as long as it is a position where a hydrogen atom can be substituted, and in cases where two or more substitutions occur, two or more substituents can be the same or different from each other.

In this specification, the term "substituted or unsubstituted" means being substituted or unsubstituted with one or more substituents selected from the group consisting of deuterium; halogen group; cyano group; nitro group; hydroxy group; carbonyl group; ester group; imide group; amide group; amino group; carboxyl group; sulfonic acid group; sulfonamide group; phosphine oxide group; alkoxy group; aryloxy group; alkylthio group; arylthio group; alkylsulfoxy group; arylsulfoxy group; silyl group; boron group; alkyl group; cycloalkyl group; alkenyl group; aryl group; aralkyl group; aralkenyl group; alkylaryl group; arylphosphine group; or heterocyclic group including one or more of N, O, and S atoms, or being substituted with a substituent to which two or more substituents among the exemplified substituents are connected. For example, "a substituent with two or more substituents connected" may be a biphenyl group. That is, the biphenyl group may be an aryl group or may be interpreted as a substituent with two phenyl groups connected.

In this specification, the alkyl group may be linear or branched, and the number of carbon atoms in the linear alkyl is not particularly limited but is preferably 1 to 20. Furthermore, the number of carbon atoms in the branched alkyl group is 3 to 20. Specific examples of alkyl groups include methyl, ethyl, propyl, n-propyl, isopropyl, butyl, n-butyl, isobutyl, tert-butyl, sec-butyl, 1-methyl-butyl, 1-ethyl-butyl, pentyl, n-pentyl, isopentyl, neopentyl, tert-pentyl, hexyl, n-hexyl, 1-methylpentyl, 2-methylpentyl, 4-methyl-2-pentyl, 3,3-dimethylbutyl, 2-ethylbutyl, heptyl, n-heptyl, 1-methylhexyl, cyclopentylmethyl, cyclohexylmethyl, octyl, n-octyl, tert-octyl, 1-methylheptyl, 2-ethylhexyl, 2-propylpentyl, n-nonyl, 2,2-dimethylheptyl, 1-ethyl-propyl, 1,1-dimethyl-propyl, isohexyl, 2-methylpentyl, 4-methylhexyl, 5-methylhexyl and the like, but is not limited to these. The alkyl group may be substituted or unsubstituted, and in the case of substitution, examples of substituents are as described above.

In this specification, the aryl group is not particularly limited, but it is preferably a group having 6 to 60 carbon atoms and may be a monocyclic aryl group or a polycyclic aryl group. According to one embodiment, the number of carbon atoms in the aryl group is 6 to 30. According to another embodiment, the number of carbon atoms in the aryl group is 6 to 20. The monocyclic aryl group may include phenyl, biphenyl, terphenyl, etc., but is not limited to these. The polycyclic aryl group may include naphthyl, anthracenyl, phenanthryl, pyrenyl, perylenyl, chrysene, fluorenyl, etc., but is not limited to these. The aryl group may be substituted or unsubstituted, and in the case of substitution, examples of substituents are as described above.

In this specification, a heteroaryl group includes one or more heteroatoms, which are non-carbon atoms, specifically including one or more atoms selected from the group consisting of O, N, Se, and S. The number of carbon atoms is not particularly limited, but it is preferably from 2 to 60, and the heteroaryl group may be monocyclic or polycyclic. Examples of heterocyclic groups include thiophenyl, furanyl, pyrrolyl, imidazolyl, thiazolyl, oxazolyl, oxadiazolyl, pyridyl, bipyridyl, pyrimidinyl, triazinyl, triazolyl, acridinyl, pyridazinyl, pyrazinyl, quinolinyl, quinazolinyl, quinoxalinyl, phthalazinyl, pyrido pyrimidinyl, pyrido pyrazinyl, pyrazino pyrazinyl, isoquinolinyl, indolyl, carbazolyl, benzoxazolyl, benzimidazolyl, benzothiazolyl, benzocarbazolyl, benzothiophenyl, dibenzothiophenyl, benzofuranyl, phenanthrolinyl, thiazolyl, isoxazolyl, oxadiazolyl, thiadiazolyl, benzothiazolyl, phenothiazinyl, aziridinyl, azindolyl, isoindolyl, indazolyl, purinyl, pteridinyl, beta-carbolinyl, naphthyridinyl, tert-pyridyl, phenazinyl, imidazopyridyl, pyropyridyl, azepinyl, pyrazolyl, and dibenzofuranyl, but are not limited to these. The heteroaryl group may be substituted or unsubstituted, and in the case of substitution, examples of substituents are as described above.

According to one embodiment of the invention, there may be provided a flame retardant compound represented by the following Chemical Formula 1: 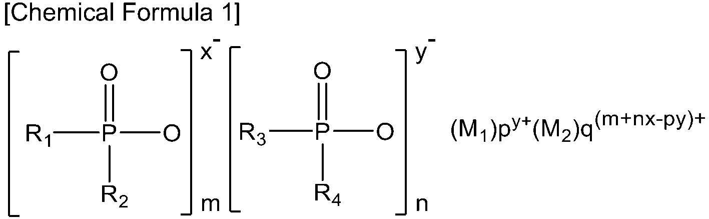 wherein, in Chemical Formula 1,
R₁ and R₂ are the same or different from each other and are each independently hydrogen, a linear or branched alkyl group, a substituted or unsubstituted aryl group, or a substituted or unsubstituted heteroaryl group,
R₃ is hydrogen, a linear or branched alkyl group, a substituted or unsubstituted aryl group, a substituted or unsubstituted heteroaryl group, O, S, NR₂, or the following Chemical Formula a, 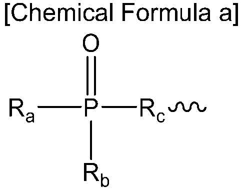
wherein, in the Chemical Formula a,
Ra, Rb, and Rc are the same or different from each other and each independently is hydrogen, a linear or branched alkyl group, a substituted or unsubstituted aryl group, a substituted or unsubstituted heteroaryl group, O, S, or NR₂,
R₄ is hydrogen, a linear or branched alkyl group, a substituted or unsubstituted aryl group, a substituted or unsubstituted heteroaryl group, O, S, or NR₂, wherein the alkyl group, aryl group, or heteroaryl group may include at least one carboxyl group, hydroxyl group, or amino group,
R₃ and R₄ may form a ring with each other,
M₁ is Zn,
M₂ is one or more selected from the group consisting of metal and ammonium ions excluding Zn,
m, n, x, and y are the same or different from each other and each independently is an integer from 0 to 5,
p and q are integers of 1 or more.

The present inventors have confirmed through experiments and completed the invention that, as represented by the Chemical Formula 1, when a compound obtained by a coordination bond between two types of phosphorous-based ligands with specific structures and two different metal elements is applied as a flame retardant, it can remarkably improve the flame retardant properties and mechanical properties of the polymer resin (i.e., binder resin) included in the flame retardant resin composition.

In addition, the flame retardant compound represented by Chemical Formula 1 can not only enhance the flame retardant properties of the thermoplastic resin composition when applied at the same content compared to conventional halogen-based flame retardants, but also exhibit sufficient flame retardancy even when used in relatively smaller amounts than conventional flame retardants, thereby providing a more effectively flame-retardant resin composition and flame-retardant products using the same. Furthermore, the flame retardant compound of Chemical Formula 1 can significantly improve the mechanical properties of polymer resins, such as not only tensile strength but also impact strength and gloss characteristics.

Specifically, a flame retardant compound for improving the flame retardancy and mechanical properties of the polymer resin may include two types of ligand repeating units represented by Chemical Formula 1 above.

In the Chemical Formula 1, the alkyl group, aryl group, and heteroaryl group defined as R₁ to R₄, Rₐ, R_{b} and R_{c} may each be a substituted or unsubstituted linear or branched alkyl group having 1 to 30 carbon atoms, an aryl group having 6 to 60 carbon atoms, or a heteroaryl group having 2 to 60 carbon atoms. Preferably, the alkyl, aryl, and heteroaryl groups of R₂ to R₄ may each independently be substituted with one or more substituents selected from the group consisting of deuterium; halogen group; cyano group; nitro group; hydroxy group; carbonyl group; ester group; imide group; amide group; amino group; carboxyl group; sulfonic acid group; sulfonamide group; phosphine oxide group; alkoxy group; aryloxy group; alkylthioxy group; arylthioxy group; alkylsulfoxy group; arylsulfoxy group; silyl group; boron group; alkyl group; cycloalkyl group; alkenyl group; aryl group; aralkyl group; aralkenyl group; alkylaryl group; arylphosphine group; and heteroaryl group. Specifically, the alkyl, aryl, and heteroaryl groups of R₁ to R₄, Rₐ, R_{b}, and R_{c} may each independently be substituted with one or more substituents selected from the group consisting of deuterium; halogen group; cyano group; nitro group; hydroxy group; amide group; carboxyl group; alkyl group; aryl group; and heteroaryl group.

According to a preferred embodiment, in the Chemical Formula 1, R₁ and R₂ may be the same or different, and are each independently a substituted or unsubstituted linear or branched alkyl group, or a substituted or unsubstituted aryl group, R₃ is an alkyl group, O, or the Chemical Formula a, and R₄ is hydrogen, an alkyl group, or an aryl group, and R₃ and R₄ may together form a ring. Specifically, in Chemical Formula 1, R₃ may be a compound of the Chemical Formula a.

In such cases, in the Chemical Formula a, Rₐ, R_{b}, and R_{c} are the same or different from each other and may each independently be hydrogen, a linear or branched alkyl group, a substituted or unsubstituted aryl group, O, or NR₂.

In addition, in "NR₂", as defined in R₃, Chemical Formula a, and R₄ above, R₂ may be the same the R₂ defined in the structure of Chemical Formula 1. Therefore, each of these may be the same or different from the others, and each independently being hydrogen, a linear or branched alkyl group, a substituted or unsubstituted aryl group, or a substituted or unsubstituted heteroaryl group.

Specifically, according to another embodiment of the invention, in the Chemical Formula 1, R₁ is a substituted or unsubstituted linear or branched alkyl group having 1 to 20 carbon atoms, O, or NR₅. In such cases, R₂ to R₄ may be the same or different from each other, and each independently being an unsubstituted linear alkyl group having 1 to 20 carbon atoms or an unsubstituted aryl group having 6 to 20 carbon atoms, and R₅ may be hydrogen.

More specifically, R₁ is a substituted or unsubstituted linear alkyl group having 1 to 10 carbon atoms, O, or NR₅, R₂ is an unsubstituted linear alkyl group having 1 to 20 carbon atoms or an unsubstituted aryl group having 6 to 20 carbon atoms, R₃ and R₄ are the same or different from each other and may each independently be a linear alkyl group having 1 to 20 carbon atoms, and R₅ may be hydrogen.

In addition, as described above, in the above Chemical Formula 1, M₁ is Zn, and M₂ may be one or more selected from the group consisting of metal and ammonium ions excluding Zn. More specifically, the M₂ may be one or more selected from the group consisting of Mg, Ca, Al, Sb, Sn, Ge, Ti, Zn, Fe, Zr, Ce, Bi, Sr, Mn, Li, Na, K, and ammonium ions. The M₂ may be one or more selected from the group consisting of Al, Zn, Mg, Ca, and ammonium ions.

The present disclosure can exhibit characteristics in which compatibility with resin can be improved by essentially including Zn in M₁.

In addition, in the Chemical Formula 1, x and y may be the same or different from each other, and may each independently be an integer from 0 to 5, or an integer from 1 to 5, or an integer from 1 to 3.

The above n and m may be the same or different from each other, and each independently may be an integer from 0 to 5, or an integer from 1 to 5, or an integer from 1 to 3.

The p and q may be the same or different, and may each independently be an integer of 1 or more, or an integer from 1 to 10.

In addition, in the Chemical Formula 1, p^{y+} may means the cation valency of the metal element M2. Furthermore, (m+nx+my)⁺ means the cation valency of the metal element M2. Specifically, nx means the value obtained by multiplying n and x, my means the value obtained by multiplying m and y, and nx+my may be from 1 to 10.

In such cases, through the configuration of a first phosphorus-based ligand having R₁ and R₂ substituents and a second phosphorus-based ligand having R₃ and R₄ substituents included within the flame retardant compound structure of the Chemical Formula 1, the coordination bonding effect between metals is further enhanced, thereby maintaining excellent flame retardant properties, securing mechanical properties that are equal to or superior to those of existing products, and improving compatibility with resins.

The flame retardant compound of Chemical Formula 1, compared to conventional halogen-based flame retardants, can increase the flame retardant characteristics of thermoplastic resin compositions when applied at the same content, and can significantly improve the polymer resin properties (impact strength, gloss).

Therefore, in the present disclosure, by using the flame retardant compound of Chemical Formula 1, sufficient flame retardancy can be achieved even with a lower amount than conventional flame retardants, and more effectively exhibit excellent flame retardant properties of V0 grade or more. In addition, the present disclosure may provide a flame retardant resin composition capable of improving not only tensile strength but also impact strength and gloss properties, as well as a flame retardant product using the same.

Meanwhile, the flame retardant compound represented by Chemical Formula 1 may be a coordination compound between ligands of one or more selected from the group consisting of the first ligand represented by the following Chemical Formula 2 and one or more selected from the group consisting of the second ligand represented by the following Chemical Formula 3; and a central metal element M. That is, a coordination compound between a total of m first ligands represented by the following Chemical Formula 2, a total of n second ligands represented by the following Chemical Formula 3, or a mixture of two or more thereof; and central metal elements M₁ and M₂, may be a flame retardant compound represented by Chemical Formula 1.

According to one preferred embodiment, the flame retardant compound of Chemical Formula 1 may be a coordination compound between ligands, which include a first ligand represented by Chemical Formula 2 and a second ligand represented by Chemical Formula 3, in which m and n are each 1; and the central metal elements M₁ and M₂. 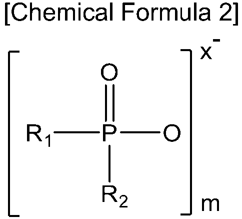 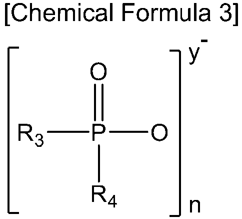 wherein, in Chemical Formulas 2 to 3, the definitions of R₁ to R₄, x, y, n, and m are the same as those described above.

Specifically, the first ligand represented by the above Chemical Formula 2 is not particularly limited to specific examples, but for example, the compound represented by the above Chemical Formula 1 may include any one of the first ligands selected from the following structural formulas.

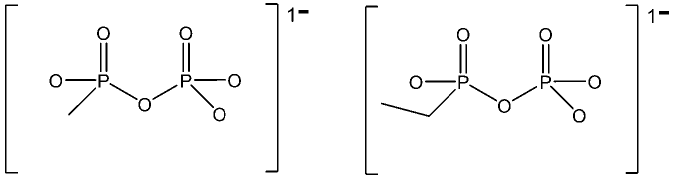

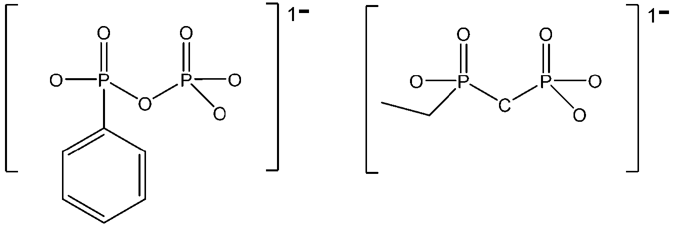

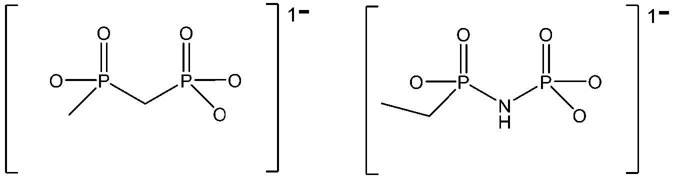

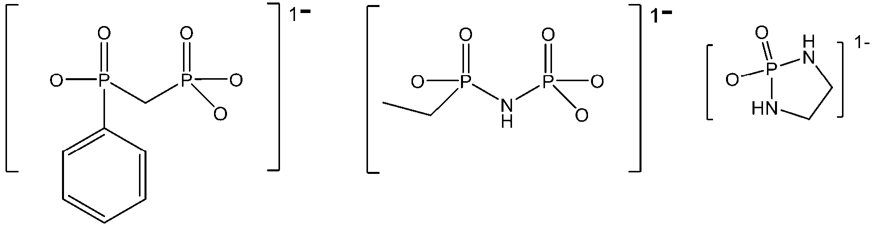

Furthermore, the second ligand represented by Chemical Formula 3 above is not particularly limited to specific examples, but for example, a compound represented by the Chemical Formula 1 above may include any one of the second ligands selected from the following structural formulas.

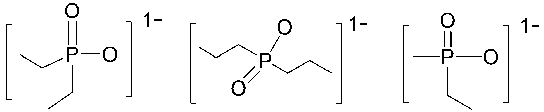

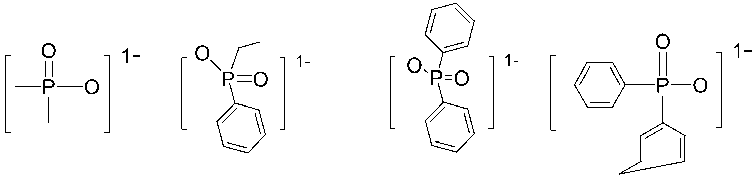

Meanwhile, the flame retardant compound represented by the Chemical Formula 1 is not particularly limited to specific examples, but for example, it may includes any one selected from the compounds of the following structural formulas.

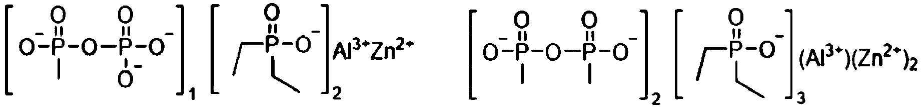

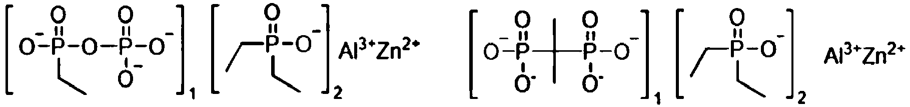

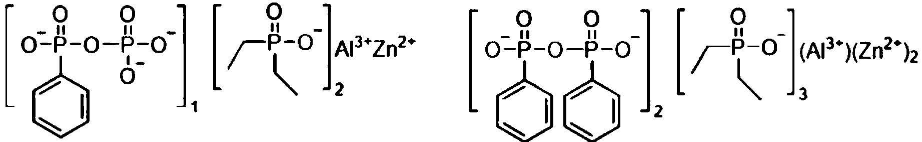

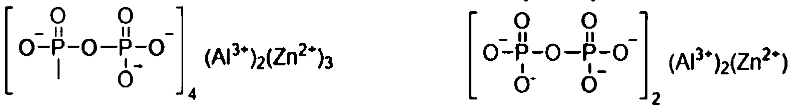

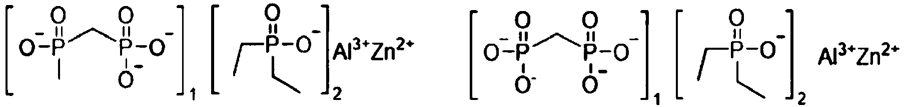

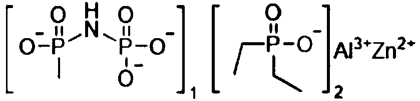

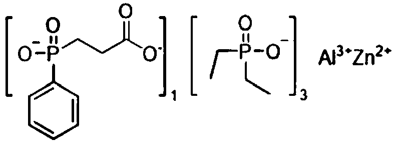

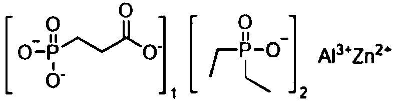

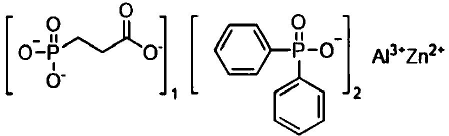

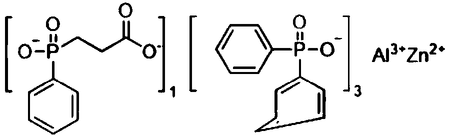

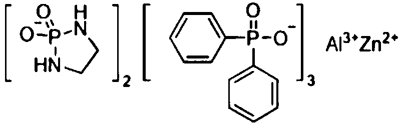

An example of a method for preparing the flame retardant compound represented by the Chemical Formula 1 is not particularly limited, but for example, it may include a process of reacting two kinds of metal salts including zinc salt and metal salt other than zinc salt and ligand precursor compounds in the presence of a base.

Examples of the above metal salts include zinc salts and aluminum salts. ZnSO₄ may be used as the zinc salt, and Al₂(SO₄)₃ can be cited as the aluminum salt.

The ligand precursor compound is a compound that reacts with a base to convert into a ligand compound in an anion form, which may be a phosphate compound or a carboxylic acid compound. The phosphate compounds may include phosphoric acid, phosphorous acid, hypophosphorous acid, or derivatives of each of these. The carboxylic acid compounds may include carboxylic acids or their derivatives.

Examples of the bases are not particularly limited, and may include, for example, LiOH, NaOH, TEA, Cs₂CO₃, or mixtures thereof.

The examples of reaction conditions between the metal salt and ligand precursor compound in the presence of the base are also not particularly limited and may apply to conventionally known reaction conditions between metal salts and ligand precursor compounds without limitation.

Meanwhile, according to another embodiment of the invention, there may be provided a flame retardant resin composition comprising the flame retardant compound of one embodiment; and a binder resin.

The contents related to the flame retardant compound include the above-described details regarding the one embodiment.

The binder resin may be applied in various forms without limitation in the form of conventionally known thermoplastic resins, thermosetting resins, or their individual, blended, or copolymer forms. Specific examples include polyester resin, polyamide resin, polyolefin resin, polyurethane resin, polyimide resin, epoxy resin, phenolic resin, and polyphenylene sulfide resin, or mixtures thereof.

In addition, by using the flame retardant compound of Chemical Formula 1, the flame retardant resin composition can maintain superior mechanical properties and improve flame retardant characteristics compared to conventional halogen-based or general flame retardants at the same content level.

In addition, the flame retardant resin composition may provide an excellent flame retardant product with superior flame resistance by exhibiting sufficient flame retardancy even when using a relatively smaller amount of the flame-retardant compound of Chemical Formula 1 compared to conventional amounts.

Furthermore, the flame retardant resin composition can enhance mechanical properties by improving the melt flow index (MFI). According to a preferred embodiment, the flame retardant resin composition of the present disclosure exhibits a melt flow index of at least 9 g/10 min, thereby improving coating properties and processability.

In one embodiment, based on the total weight of solids in the flame retardant resin composition, the flame retardant compound may be at a specific content of 10 wt% to 20 wt%, or 15 wt% to 20 wt%, or 10 wt% to 15 wt%. In addition, the content of the binder resin is included as the remainder, and more specifically may be 80 wt% to 90 wt%, or 80 wt% to 85 wt%, or 85 wt% to 90 wt%.

The total weight of the solid content means the sum of the total weight of the components in the resin composition, excluding the solvent. The standards for the weight percentage based on the solid content and the solid content of each component, may be measured using common analytical methods used in the related industries, such as liquid chromatography or gas chromatography.

The solvent may include one or more selected from the group consisting of acetone, methyl ethyl ketone, methyl isobutyl ketone, methyl cellosolve, ethyl cellosolve, tetrahydrofuran, 1,4-dioxane, ethylene glycol dimethyl ether, ethylene glycol diethyl ether, propylene glycol dimethyl ether, propylene glycol diethyl ether, diethylene glycol dimethyl ether, diethylene glycol diethyl ether, diethylene glycol methyl ethyl ether, chloroform, methylene chloride, 1,2-dichloroethane, 1,1,1-trichloroethane, 1,1,2-trichloroethane, 1,1,2-trichloroethene, hexane, heptane, octane, cyclohexane, benzene, toluene, xylene, methanol, ethanol, isopropanol, propanol, butanol, t-butanol, 2-ethoxypropanol, 2-methoxypropanol, 3-methoxybutanol, cyclohexanone, cyclopentanone, propylene glycol methyl ether acetate, propylene glycol ethyl ether acetate, 3-methoxybutyl acetate, ethyl 3-ethoxypropionate, ethyl cellosolve acetate, methyl cellosolve acetate, butyl acetate, propylene glycol monomethyl ether, and dipropylene glycol monomethyl ether, but it is not limited to these.

Additionally, the flame-retardant resin composition may further include other additives. The content of these other additives is from 0.01% by weight to 20% by weight based on the total weight of the solids in the flame-retardant resin composition.

The types, methods of addition, and timing of addition of the other additives are not particularly restricted and may be applied without limitation to various known contents. Specific examples of additives include impact modifiers, antioxidants, compatibilizers, hydrolysis stabilizers, ultraviolet stabilizers, heat stabilizers, color additives, fixatives, flame retardants, fiber reinforcements, inorganic fillers, nucleating agents, lubricants, release agents, colorants, hydrolysis stabilizers, viscosity enhancers, fluorescent brighteners, chain extenders, pigments, dyes, antistatic agents, or mixtures of two or more of these.

Meanwhile, the flame retardant resin composition may have a flame retardancy of V0 or V1 grade as measured according to the UL-94 test standard. The example of a specimen measured for flame retardancy according to the UL-94 standard is not particularly limited, but for example, it may be a specimen with dimensions of 1.6 mm thickness, 12.7 mm width, and 127 mm length in which the flame retardant resin composition may be mixed in a twin-screw extruder at a temperature of 230°C to 260°C or 260°C to 280°C, to draw a homogenized polymer strand, cool it in a water bath, then pelletize and sufficiently dry it, followed by processing in an injection molding machine at melting temperature of 240°C to 270°C or 260°C to 290°C. The flame-retardant resin composition can achieve excellent flame-retardant properties by satisfying the V0 or V1 grade as measured according to the UL-94 test standard. However, if the flame-retardant property measured according to the UL-94 test standard rises to a V2 grade or more, the flame-retardant property becomes poor.

Meanwhile, the flame retardant resin composition may have a tensile strength of 425 kgf/cm² or more, or 428 kgf/cm² or more, or 425 kgf/cm² to 500 kgf/cm², or 428 kgf/cm² to 480 kgf/cm² as measured according to ASTM D638. The specimen, equipment, and conditions used for measuring the tensile strength is not particularly limited, and the ASTM D638 method and conventionally known methods for measuring the tensile strength of resin molded products can be applied without limitation. However, for example, specifically, using a UTM-5566 (Universal Testing Machine, Instron Co.), five dumbbell-shaped specimens are produced according to the ASTM D638 standards, then, the tensile strength of each of the five specimens is measured at a speed of 50 mm/min, and the result may be indicated as the average of these values. The flame retardant resin composition can achieve excellent tensile properties by satisfying a tensile strength of 425 kgf/cm² or more as measured according to ASTM D638. If the tensile strength decreases to less than 425 kgf/cm², the tensile properties become inferior.

Meanwhile, the flame-retardant resin composition may have an impact strength of 2.1 kgf-cm/cm or more, or 2.1 kgf·cm/cm to 3.0 kgf·cm/cm, or 2.1 kgf·cm/cm to 2.6 kgf·cm/cm, measured at 23°C according to ASTM D256 (1/8 inch, Notched Izod). The examples of specimens, equipment, and conditions used for measuring the impact strength are not particularly limited, and the ASTM D256 method and conventionally known methods for measuring the impact strength of resin molded products can be applied without limitation. The flame retardant resin composition satisfies an impact strength of 2.1 kgf·cm/cm or more measured at 23°C according to ASTM D256 (1/8 inch, Notched Izod), thereby achieving excellent impact characteristics. If the impact strength decreases to less than 2.1 kgf·cm/cm, the impact characteristics become inferior.

The flame-retardant resin composition may have a melt flow index (MFI) of 9 (g/10 min) or more, or from 9 to 30 (g/10 min), or from 9 to 20 (g/10 min), measured according to the ISO 1133 method (220 °C, 10 kg).

Meanwhile, according to another embodiment of the invention, there may be provided a flame retardant product comprising the flame-retardant resin composition of the other embodiment.

The contents related to the flame retardant resin composition includes the above-described details regarding the other embodiments.

The flame retardant product may include the flame retardant resin composition of the other embodiment or a molded product thereof. The flame retardant resin composition may be directly coated on the product to form a flame retardant coating layer or may be coated on parts constituting the product to be introduced into the product.

The specific shape or size of the molded product may vary depending on its intended application, and the examples are not particularly limited. The examples of the molding method are not limited, and molding methods widely known in the field of resin compositions may be applied without limitation. For example, depending on its application use, the molded product may be obtained by molding the flame retardant resin composition through various molding methods, for example, molding methods such as injection molding, extrusion molding, extrusion blow molding, injection blow molding, and profile extrusion molding processes, as well as post-processing methods like thermo-molding using the same.

The examples of the types of the product are not particularly limited and may include, for example, electrical/electronic products and automobile parts.

### [Advantageous Effects]

According to the present disclosure, a novel phosphorus-based flame retardant compound with a new structure, which exhibits excellent flame retardancy, impact strength, and mechanical properties such as gloss of polymer resin even with reduced usage compared to conventional ones, as well as a flame-retardant resin composition and flame-retardant product using the same, can be provided.

### [DETAILED DESCRIPTION OF THE EMBODIMENTS]

The invention will be described in more detail in the following examples. However, the following examples are merely illustrative of the present disclosure, and the content of the present disclosure is not limited by the following examples.

### <Preparation Examples 1 to 3: Preparation of Flame Retardant Compounds>

### Preparation Example 1

A compound represented by Chemical Formula 1-1 was synthesized by the following reaction.

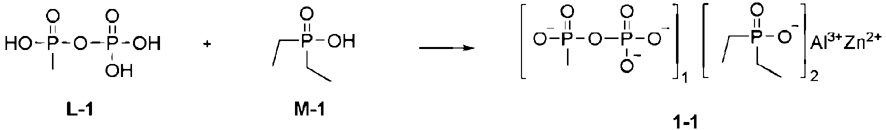

The L-1 compound (1.0 equiv) and diethylphosphinic acid (M-1 compound) (2.0 equiv) were added to the reactor as reactants, and NaOH, as the base, was dissolved in water at room temperature and stirred. Then, zinc salt (ZnSO₄, 2.0 equiv) and aluminum salt (Al₂(SO₄)₃, 0.5 equiv) were added, and the reaction was carried out by raising the temperature to 100°C and stirring for 12 hours.

After completion of the reaction, the solid was isolated by vacuum filtration using a suction filter, washed additionally with water and acetone (twice each), and the solid product was purified. The solid product was transferred to a glass bottle, placed in a vacuum oven, and dried overnight to obtain Compound 1-1. (Yield: 92%)

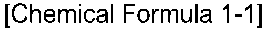

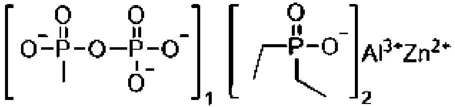

### Preparation Example 2

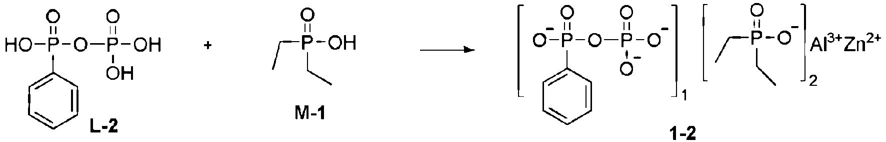

A compound represented by Chemical Formula 1-2 was synthesized in the same manner as in Preparation Example 1, except that L-2 (1.0 equiv) was used as the reactant instead of the L-1. (Yield: 85%)

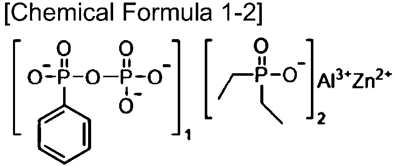

### Preparation Example 3

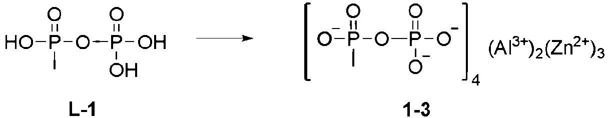

Except for not using M-1 as a reactant, the compound represented by Chemical Formula 1-3 was synthesized in the same manner as in Preparation Example 1. (Yield: 88%)

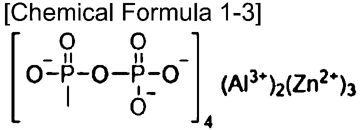

### Preparation Example 4

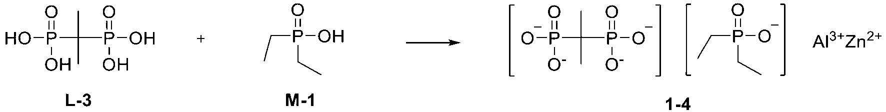

A compound represented by Chemical Formula 1-4 was synthesized in the same manner as in Preparation Example 1, except that L-3 (1.0 equiv) was used as the reactant instead of L-1. (Yield: 95%)

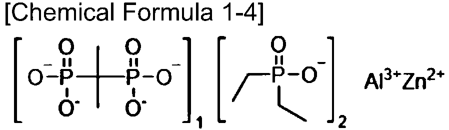

### Preparation Example 5

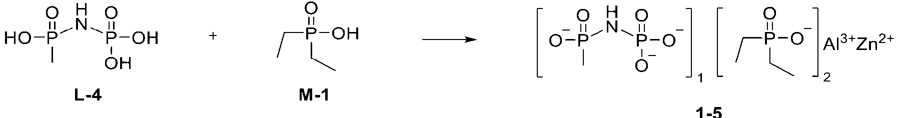

A compound represented by Chemical Formula 1-5 was synthesized in the same manner as in Preparation Example 1, except that L-5 (1.0 equiv) was used as the reactant instead of L-1. (Yield: 95%)

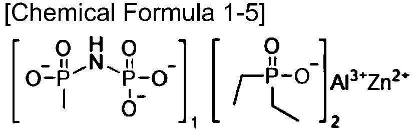

### Preparation Example 6

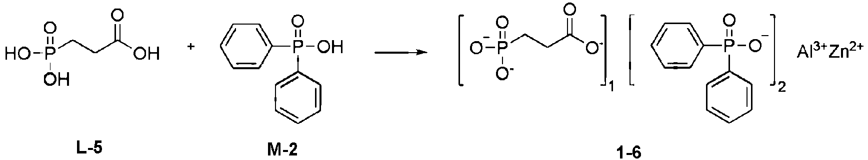

A compound represented by Chemical Formula 1-6 was synthesized in the same manner as in Preparation Example 1, except that L-5 was used instead of L-1 and M-2 was used instead of M-1 as reactants. (Yield: 96%)

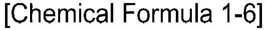

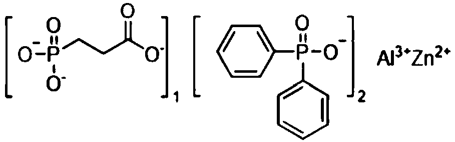

### Preparation Example 7

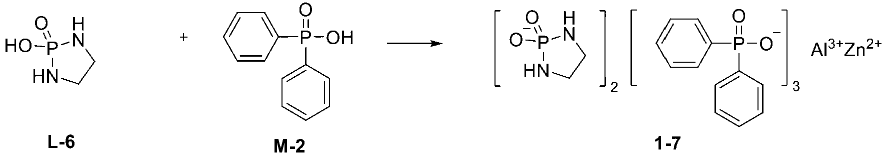

A compound represented by Chemical Formula 1-7 was synthesized in the same manner as in Preparation Example 1, except that L-6 was used instead of L-1 and M-2 was used instead of M-1 as reactants. (Yield: 90%)

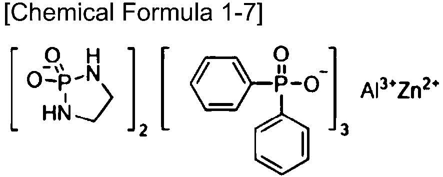

### <Comparative Preparation Example 1: Preparation of Flame-Retardant Compound>

### Comparative Preparation Example 1

The following compound A-1 was used as Comparative Preparation Example 1.

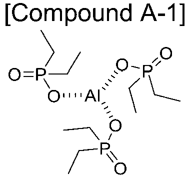

### <Examples 1 to 7: Preparation of Flame-Retardant Resin Composition>

A flame-retardant resin composition was prepared using the compounds of Chemical Formulas 1-1 to 1-7 as phosphorus-based flame retardants.

According to the composition in Table 1 below, 80% by weight of thermoplastic resin and 20% by weight of phosphorus-based flame retardant, based on the total weight of solids in the flame-retardant resin composition, were mixed for 5 to 20 minutes, then added to an extruder. The mixture was melted and extruded under the conditions of a cylinder temperature of 240°C and a stirring speed of 200 rpm to prepare pellets. The prepared pellets were dried at 90°C for one day, then injection-molded at 240°C to prepare specimens for physical property measurement.

**[Table 1]**

| Classification | Thermoplastic resin | Additive (Flame Retardant) | |
|---|---|---|---|
| Example 1 | | 1-1 | Phosphorus-based flame retardant 1 |
| | | | (Preparation example 1) |
| Example 2 | | 1-2 | Phosphorus-based flame retardant 2 |
| | | | (Preparation example 2) |
| Example 3 | | 1-3 | Phosphorus-based flame retardant 3 |
| | | | (Preparation example 3) |
| Example 4 | ABS resin Intrinsic Viscosity (IV): 0.7-0.8 dl/g | 1-4 | Phosphorus-based flame retardant 4 |
| | | | (Preparation example 4) |
| Example 5 | | 1-5 | Phosphorus-based flame retardant 5 |
| | | | (Preparation example 5) |
| Example 6 | | 1-6 | Phosphorus-based flame retardant 6 |
| | | | (Preparation example 6) |
| Example 7 | | 1-7 | Phosphorus-based flame retardant 7 (Preparation example 7) |
| Comparative Example 1 | | A-1 | Phosphorus-based flame retardant 8 (Comparative Preparation example 1) |

### <Comparative Example 1: Preparation of Flame Retardant Resin Compositions>

### Comparative Example 1

As shown in Table 1, the resin composition was prepared in the same manner as in Example 1, except that the compound A-1 obtained in Comparative Preparation Example 1 was used instead of the phosphorus-based flame retardant compound 1-1 obtained in Preparation Example 1, and thermoplastic resin (77 wt%) and excess amounts of the phosphorus-based flame retardant (23 wt%) compared to the Examples were used.

### <Experiment Example: Measurement of Physical Properties of Flame-Retardant Resin Composition>

The properties of the flame retardant resin compositions obtained in the examples and comparative examples were measured by the following methods, and the results are shown in Table 3.

### 1. Flame Retardancy

The flame retardant components obtained in the examples and comparative examples were mixed with polymer pellets and optional additives, and then blended using a twin-screw extruder at a temperature of 230°C to 260°C, or at a temperature of 260°C to 280°C. The homogenized polymer strand was drawn, cooled in a water bath, and then pelletized.

After sufficiently drying, the above molding composition was processed in an injection molding machine at a melt temperature of 240°C to 270°C or a melt temperature of 260°C to 290°C to obtain a specimen. Using a specimen with dimensions of 1.6 mm thickness, 12.7 mm width, and 127 mm length, the flame retardancy was evaluated according to the UL-94 test standard.

Specifically, after bringing a flame of 20 mm height to the specimen for 10 seconds, the combustion time (t1) of the specimen was measured, and the combustion pattern was recorded. Subsequently, after the first flame contact, when the combustion was completed, [the specimen] was brought into contact with the flame again for 10 seconds, and the combustion time (t2) and the formation time of sparks (glowing time, t3) of the specimen were measured, and the combustion pattern was recorded. The same procedure was applied to five specimens and then evaluated based on the standards in Table 2 below.

**[Table 2]**

| Grade of flame retardancy | V0 | V1 | V2 |
|---|---|---|---|
| Individual combustion time (t1 or t2 of individual specimens) | 10 sec or less | 30 sec or less | 30 sec or less |
| Total combustion time of 5 specimens (Total sum of t1 and t2 of 5 specimens) | 50 sec or less | 250 sec or less | 250 sec or less |
| Times of the combustion and the formation of sparks after the secondary flame contact (Total sum of t2 and t3 of each individual specimen) | 30 sec or less | 60 sec or less | 60 sec or less |
| Whether spark-emitting particles are dropped | None | None | None |

### 2. Other Properties Besides Flame Retardancy

(1) Tensile strength: It was measured according to the ASTM D638 method. Specifically, using a UTM-5566 (Universal Testing Machine, Instron Co.), five dumbbell-shaped specimens were prepared according to the ASTM D638 standard, and the tensile strength of each of the five specimens was measured at a speed of 50 mm/min. The results were indicated as the average of these values.
(2) Izod room temperature impact strength: It was measured at 23°C according to ASTM D256 (1/8 inch, Notched Izod).
(3) Melt Flow Index (MFI): It was measured according to the ISO 1133 method. (220°C, 10kg)

**[Table 3]**

| Results of the Experiment | | | | | |
|---|---|---|---|---|---|
| Examples | Additive | Flame Retardancy | Tensile strength (kgf/cm²) | Impact strength (kgf·cm/cm) | Melt Flow Index (g/10min) |
| | | UL grade | | | |
| Example 1 | 1-1 | V-0 | 430 | 9.8 | 15.0 |
| Example 2 | 1-2 | V-0 | 400 | 10.1 | 18.3 |
| Example 3 | 1-3 | V-0 | 420 | 12.0 | 19.0 |
| Example 4 | 1-4 | V-0 | 395 | 5.5 | 9.0 |
| Example 5 | 1-5 | V-0 | 425 | 9.0 | 12.0 |
| Example 6 | 1-6 | V-0 | 390 | 8.2 | 13.8 |
| Example 7 | 1-7 | V-0 | 370 | 7.0 | 8.8 |
| Comparative Example 1 | A-1 | V-0 | 350 | 4.4 | 7.2 |

As shown in Table 3, it was confirmed that the flame-retardant resin compositions obtained in Examples 1 to 7, compared to Comparative Example 1, by including a phosphorus-based flame-retardant compound that is a metal coordination complex containing an x-ligand composed of a substituent of Chemical Formula 1, exhibited excellent flame retardancy with a UL grade of V0 even at a lower content, and not only the tensile strength and impact strength but also the melt flow index were all excellent.

On the other hand, Comparative Example 1 includes a general phosphorus-based flame retardant compound, and even though a greater amount is used compared to the examples, it only exhibited the flame retardant property of a UL grade of V0. In addition, not only did the mechanical properties such as tensile strength and impact strength but also the melt flow index show inferior results compared to the examples. Therefore, Comparative Example 1, due to its lower melt flow index compared to the examples, may exhibit reduced coating properties or processability of the resin composition.

## Claims

1. A flame retardant compound represented by the following chemical formula1: 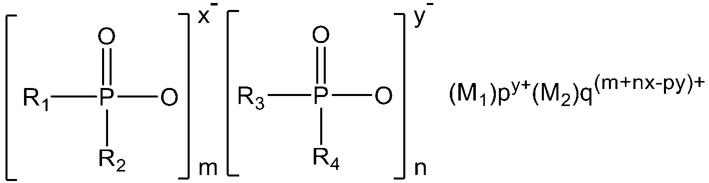 wherein, in Chemical Formula 1,
R₁ and R₂ are the same or different from each other and are each independently hydrogen, a linear or branched alkyl group, a substituted or unsubstituted aryl group, or a substituted or unsubstituted heteroaryl group,
R₃ is hydrogen, a linear or branched alkyl group, a substituted or unsubstituted aryl group, a substituted or unsubstituted heteroaryl group, O, S, NR₂, or the following Chemical Formula a, 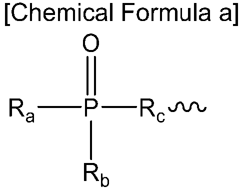
wherein, in the Chemical Formula a,
Ra, Rb, and Rc are the same or different from each other and each independently is hydrogen, a linear or branched alkyl group, a substituted or unsubstituted aryl group, a substituted or unsubstituted heteroaryl group, O, S, or NR₂,
R₄ is hydrogen, a linear or branched alkyl group, a substituted or unsubstituted aryl group, a substituted or unsubstituted heteroaryl group, O, S, or NR₂, wherein the alkyl group, aryl group, or heteroaryl group may include at least one carboxyl group, hydroxyl group, or amino group,
R₃ and R₄ may form a ring with each other,
M₁ is Zn,
M₂ is one or more selected from the group consisting of metal and ammonium ions excluding Zn,
m, n, x, and y are the same or different from each other and each independently is an integer from 0 to 5,
p and q are integers of 1 or more.

2. The flame retardant compound of claim 1, wherein in the Chemical Formula 1:
R₁ and R₂ are the same or different, and are each independently a substituted or unsubstituted linear or branched alkyl group, or a substituted or unsubstituted aryl group,
R₃ is an alkyl group, O, or the Chemical Formula a,
R₄ is hydrogen, an alkyl group, or an aryl group, and
R₃ and R₄ may together form a ring.

3. The flame retardant compound of claim 2, wherein in the Chemical Formula 1:
R₃ is a compound of the Chemical Formula a.

4. The flame retardant compound of claim 1, wherein in the Chemical Formula 1:
R₁ and R₂ are the same or different, and are each independently a substituted or unsubstituted linear or branched alkyl group, or a substituted or unsubstituted aryl group,
R₃ is the Chemical Formula a,
R₄ is hydrogen, or an alkyl group.

5. The flame retardant compound of claim 1,
wherein M₂ is one or more selected from the group consisting of Mg, Ca, Al, Sb, Sn, Ge, Ti, Zn, Fe, Zr, Ce, Bi, Sr, Mn, Li, Na, K, and ammonium ions.

6. The flame retardant compound of claim 5,
wherein M₂ is one or more selected from the group consisting of Al, Zn, Mg, Ca, and ammonium ions.

7. The flame retardant compound of claim 1, wherein the flame retardant compound represented by the Chemical Formula 1 includes any one selected from the compounds of the following structural formulas:

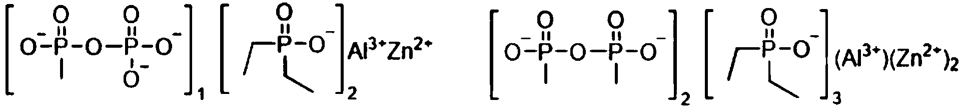

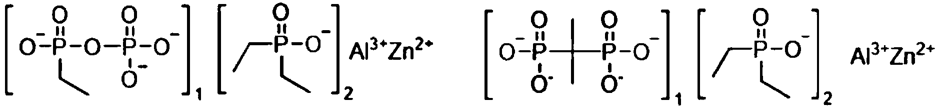

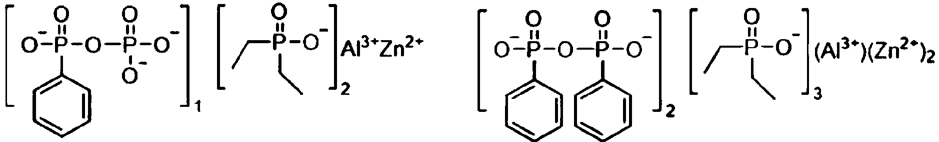

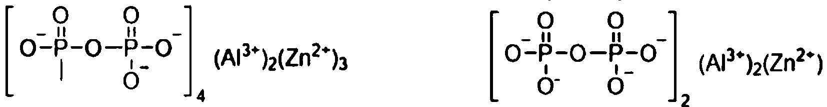

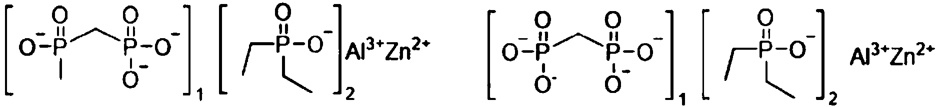

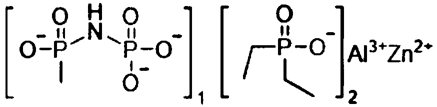

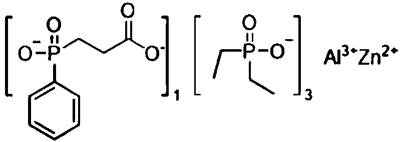

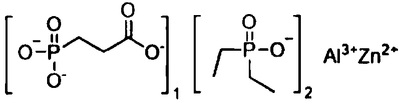

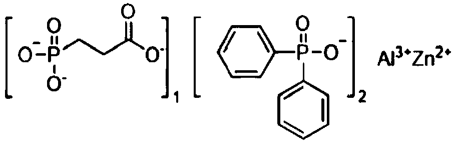

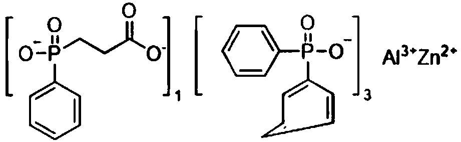

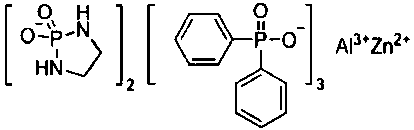

8. A flame retardant resin composition comprising the flame retardant compound of claim 1; and a binder resin.

9. The flame retardant resin composition of claim 8,
wherein the binder resin comprises a polyester, or a polyamide.

10. The flame retardant resin composition of claim 8,
wherein the content of the flame retardant compound is from 10 wt% to 20 wt% based on the total weight of the solids in the flame retardant resin composition.

11. The flame retardant resin composition of claim 8,
wherein the flame retardant resin composition has a melt flow index (MFI) of 9 (g/10min) or more, measured according to the ISO 1133 method (220°C, 10kg).

12. A flame retardant product comprising the flame-retardant resin composition of claim 8.
